# EUROPÄISCHE PATENTANMELDUNG

(11) **EP 4 311 744 A1**
(43) Veröffentlichungstag der Anmeldung: **31.01.2024**
(21) Anmeldenummer: 22186752.6
(22) Anmeldetag: 25.07.2022
(51) Int. Cl.: B62D 15/02, G05D 1/02, G08G 1/14

(54) **VORRICHTUNG UND VERFAHREN ZUR KOORDINATION EINES PARKRAUMS, FAHRZEUG UND PARKLEITSYSTEM**

(71) Anmelder: Siemens Aktiengesellschaft, 80333 München (DE)
(72) Erfinder: Wilde, Robert, 81739 München (DE)
(74) Vertreter: Siemens Patent Attorneys

(57) **Zusammenfassung**

Die vorliegende Erfindung betrifft eine Optimierung der Ausnutzung eines Parkraums zum Abstellen von Fahrzeugen. Hierzu ist es vorgesehen, dass es sich Fahrzeugen beim Nutzen des Parkraums bei einem Parkleitsystem anmelden und sich beim Verlassen des Parkraums abmelden. Unter Verwendung dieser Anmelde- und Abmeldeinformationen kann eine optimale Positionierung der Fahrzeuge in dem Parkraum bestimmt werden. Bei Bedarf können ganz oder zumindest teilweise autonom fahrende Fahrzeuge veranlasst werden, ihre Position in dem Parkraum zu verändern.

## Beschreibung

### Technisches Gebiet

Die vorliegende Erfindung betrifft ein Parkleitsystem zur Optimierung eines Parkraums zum Abstellen von Fahrzeugen. Die vorliegende Erfindung betrifft ferner eine Vorrichtung und Verfahren zur Koordination eines solchen Parkraums sowie ein ganz oder zumindest teilweise autonom fahrendes Fahrzeug.

### Hintergrund

Im Zuge der hohen Verbreitung von Kraftfahrzeugen kommt auch einer effizienten Nutzung des Parkraums für aktuell nicht genutzte Fahrzeuge eine immer größer werdende Bedeutung zu. Insbesondere in Ballungsräumen steht in der Regel nur ein begrenzter Parkraum zur Verfügung.

Werden Fahrzeuge manuell durch einen Benutzer auf einem zum Parken von Fahrzeugen vorgesehenen Bereich abgestellt, so können gegebenenfalls zwischen einzelnen Fahrzeugen größere Bereiche entstehen, die jedoch nicht ausreichend sind, um in solchen Bereichen ein weiteres Fahrzeug zu parken. Solche Bereiche können beispielsweise durch große Abstände beim Einparken eines Fahrzeugs entstehen. Auch kann beispielsweise ein solcher Bereich entstehen, wenn ein kleineres Fahrzeug an einer Position abgestellt wird, an der zuvor ein größeres Fahrzeug abgestellt war.

Bei konventionellen Parkplätzen wird in der Regel für jedes Fahrzeug ein Bereich vorgesehen, dessen Abmessungen ausreichend sind, um das größtmögliche Fahrzeug dort abzustellen. Werden solche Parkplätze jedoch von kleineren Fahrzeugen genutzt, so könnten in einem Parkraum mit derartigen Parkplätzen gegebenenfalls auch eine höhere Anzahl von Fahrzeugen abgestellt werden.

Vor diesem Hintergrund ist es wünschenswert, den Parkraum zum Abstellen von Fahrzeugen möglichst optimal zu bewirtschaften. Insbesondere ist es wünschenswert, Fahrzeuge auf einem solchen Parkraum effizient und möglichst dynamisch derart anzuordnen, dass eine größtmögliche Anzahl von Fahrzeugen abgestellt werden kann.

### Offenbarung der Erfindung

Die vorliegende Erfindung schafft ein Parkleitsystem, eine Vorrichtung und ein Verfahren zur Koordination von Parkraum sowie ein ganz oder zumindest teilweise autonom fahrendes Fahrzeug mit den Merkmalen der unabhängigen Patentansprüche. Weitere vorteilhafte Ausführungsformen sind Gegenstand der abhängigen Patentansprüche.

Gemäß einem ersten Aspekt ist ein Parkleitsystem zur Optimierung eines Parkraums vorgesehen. Der zu optimierende Parkraum ist insbesondere zum Abstellen von Fahrzeugen vorgesehen, vorzugsweise für ganz oder zumindest teilweise autonom fahrende Fahrzeuge. Das Parkleitsystem umfasst eine Kommunikationseinrichtung und eine Verarbeitungseinrichtung. Die Kommunikationseinrichtung ist dazu ausgelegt, Anmeldenachrichten von Fahrzeugen zu empfangen. Insbesondere kann die Kommunikationseinrichtung Anmeldenachrichten von Fahrzeugen empfangen, die in dem Parkraum geparkt werden. Weiterhin ist die Kommunikationseinrichtung dazu ausgelegt, Abmeldenachrichten von Fahrzeugen zu empfangen. Insbesondere kann die Kommunikationseinrichtung Abmeldenachrichten von Fahrzeugen empfangen, die den Parkraum verlassen. Die Verarbeitungseinrichtung ist dazu ausgelegt, optimale Positionen für Fahrzeuge zu ermitteln, die in dem Parkraum geparkt werden sollen. Hierbei werden die optimalen Positionen unter Verwendung der empfangenen Anmeldenachrichten und der empfangenen Abmeldenachrichten ermittelt. Ferner ist die Verarbeitungseinrichtung dazu ausgelegt, eine Aufforderung zum Wechsel einer Parkposition für ein Fahrzeug in dem Parkraum zu generieren. Eine solche Aufforderung zum Wechsel der Parkposition kann insbesondere dann generiert werden, falls die aktuelle Position des Fahrzeugs in dem Parkraum von der ermittelten optimalen Position für das Fahrzeug abweicht. Die Kommunikationsvorrichtung ist ferner dazu ausgelegt, die generierte Aufforderung zum Wechsel der Parkposition auszusenden. Insbesondere kann die generierte Aufforderung zum Wechsel der Parkposition an das Fahrzeug gesendet werden, welches den Wechsel der Parkposition ausführen soll.

Gemäß einem weiteren Aspekt ist eine Vorrichtung zur Koordination von Parkraum vorgesehen. Diese Vorrichtung ist dazu ausgelegt ist, in einem ganz oder zumindest teilweise autonom fahrenden Fahrzeug angeordnet zu werden. Ferner ist die Vorrichtung dazu ausgelegt, eine Anmeldenachricht auszusenden, falls das Fahrzeug auf einem Parkplatz eines zu koordinierenden Parkraums abgestellt wird. Darüber hinaus ist die Vorrichtung dazu ausgelegt, eine Abmeldenachricht auszusenden, falls das Fahrzeug den Parkplatz des zu koordinierenden Parkraums verlässt.

Gemäß noch einem weiteren Aspekt ist ein Fahrzeug, insbesondere ein ganz oder zumindest teilweise autonom fahren des Fahrzeugs vorgesehen. Dieses Fahrzeug umfasst eine erfindungsgemäße Vorrichtung zur Koordination von Parkraum.

Gemäß noch einem weiteren Aspekt ist ein Verfahren zur Koordination eines Parkraums, insbesondere eines Parkraums zum Abstellen von Fahrzeugen vorgesehen. Das Verfahren umfasst einen Schritt zum Empfangen von Anmeldenachrichten von Fahrzeugen, die in dem Parkraum geparkt werden. Weiterhin umfasst das Verfahren einen Schritt zum Empfangen von Abmeldenachrichten von Fahrzeugen, die den Parkraum verlassen. Darüber hinaus umfasst das Verfahren einen Schritt zum Ermitteln optimaler Positionen von Fahrzeugen, die in dem Parkraum geparkt werden sollen. Die optimalen Positionen können insbesondere unter Verwendung der empfangenen Anmeldenachrichten und der empfangenen Abmeldenachrichten ermittelt werden. Schließlich umfasst das Verfahren einen Schritt zum Aussenden einer Aufforderung zum Wechsel einer Parkposition. Die Aufforderung zum Wechsel der Parkposition kann an ein ganz oder zumindest teilweise autonom fahrendes Fahrzeug in dem Parkraum ausgesendet werden., Insbesondere kann die Aufforderung zum Wechsel der Parkposition ausgesendet werden, falls die aktuelle Position des Fahrzeugs in dem Parkraum von der ermittelten optimalen Position für das Fahrzeug abweicht.

Der vorliegenden Erfindung liegt die Erkenntnis zugrunde, dass beim manuellen Parken von Kraftfahrzeugen ein zur Verfügung stehender Parkraum, also eine Fläche bzw. ein Bereich, in dem mehrere Fahrzeuge geparkt werden können, gegebenenfalls nicht optimal und effizient ausgenutzt werden kann. Darüber hinaus können sich im Laufe der Zeit, wenn einzelne Fahrzeuge den Parkraum verlassen und neue Fahrzeuge in den entstehenden Lücken eingeparkt werden, sich innerhalb des Parkraums größere Lücken bilden, die gegebenenfalls nicht ausreichend groß sind, um als Parkplatz für ein weiteres Fahrzeug genutzt zu werden.

Es ist daher eine Idee der vorliegenden Erfindung, dieser Erkenntnis Rechnung zu tragen und ein Konzept für ein effizientes Parkplatzmanagement bereitzustellen. Hierzu ist es vorgesehen, dass sich die einzelnen Fahrzeuge einerseits beim Einparken registrieren und andererseits beim Ausparken auch wieder abmelden. Somit kann durch diese Anmelde- und Abmeldevorgänge kontinuierlich eine Übersicht über die belegten Bereiche eines Parkraums gewonnen werden. Dabei können insbesondere die Anforderungen der einzelnen Fahrzeuge, welche in dem Parkraum geparkt werden sollen, individuell erfasst werden. Auf Grundlage dieser Daten kann daraufhin die Nutzung des zur Verfügung stehenden Parkraums optimiert werden.

Insbesondere kann bei Veränderungen innerhalb des Parkraums, beispielsweise beim Verlassen eines oder mehrerer Fahrzeuge, eine neue Optimierung des Parkraums ausgeführt werden. Hierbei können ganz oder zumindest teilweise autonom fahrende Fahrzeuge dazu veranlasst werden, bei Bedarf ihre Parkposition automatisch gemäß einer neu ermittelten Anordnung für eine optimale Nutzung des Parkraums anzupassen. Somit können beispielsweise Lücken, die beim Ausparken eines Fahrzeugs entstehen, effizient geschlossen bzw. verkleinert werden. Darüber hinaus können bei der Optimierung des Parkraums selbstverständlich auch beliebige weitere Rahmenbedingungen mitberücksichtigt werden. Beispielsweise können Fahrzeuge auch entsprechend ihrer noch zu erwartenden Restparkdauer oder beliebige andere Anforderungen, wie zum Beispiel Vorgaben eines Benutzers für eine Nutzung oder das Vermeiden eines bestimmten Bereichs oder einer bestimmten Position des Parkraums, bei der Ermittlung eine optimale Nutzung des Parkraums sowie gegebenenfalls einer Neuanordnung der Fahrzeuge mitberücksichtigt werden.

Ein erfindungsgemäßes Parkleitsystem überwacht somit kontinuierlich den in einem Parkraum zur Verfügung stehenden Platz. Wird ein weiteres Fahrzeug in dem Parkraum geparkt, so kann dieses Fahrzeug eine Anmeldenachricht an das Parkleitsystem senden. Damit meldet sich das Fahrzeug bei dem Parkleitsystem an, und das Parkleitsystem registriert den durch dieses Fahrzeug belegten Parkplatz als belegten Bereich. Verlässt ein Fahrzeug den Parkraum, d. h. wird das Fahrzeug ausgeparkt, so kann ein solches Fahrzeug eine Abmeldenachricht an das Parkleitsystem senden. Daraufhin kann das Parkleitsystem den durch dieses Fahrzeug zuvor belegten Parkplatz als frei registrieren. Nach einer Veränderung in dem Parkraum durch neu hinzugekommene und/oder ausparkende Fahrzeuge kann das Parkleitsystem daraufhin eine Optimierung des Parkraums durchführen. Hierbei kann beispielsweise eine Anordnung der sich aktuell in dem Parkraum befindlichen Fahrzeuge ermittelt werden, bei welchem durch die in dem Parkraum befindlichen Fahrzeuge einen möglichst geringen Bereich des Parkraums belegen bzw. blockieren. Somit steht ein möglichst großer Bereich des Parkraums für weitere Fahrzeuge zur Verfügung.

Falls sich bei der Optimierung des Parkraums für eines oder mehrerer der in dem Parkraum abgestellten Fahrzeuge eine Position ergibt, die von der aktuellen Position des jeweiligen Fahrzeugs abweicht, so kann das Parkleitsystem beispielsweise die entsprechenden Fahrzeuge dazu veranlassen, durch ein autonomes Fahrmanöver an die gewünschte optimale Parkposition zu navigieren.

Wie nachfolgend noch näher erläutert wird, können bei der Optimierung des Parkraums und der daraus resultierenden Anordnung der Fahrzeuge in dem Parkraum auch beliebige weitere Bedingungen mitberücksichtigt werden. Beispielsweise kann dabei auch eine gegebenenfalls spezifizierte Parkdauer mitberücksichtigt werden. Somit können gegebenenfalls bereits vorausschauend zu erwartende Lücken aufgrund von zukünftig ausparkenden Fahrzeugen mitberücksichtigt werden. Entsprechend kann für die optimale Anordnung der Fahrzeuge in dem Parkraum auch eine Konfiguration ermittelt werden, die gegebenenfalls die Anzahl der Manöver zum Umparken von Fahrzeugen minimiert. Beispielsweise können Fahrzeuge, welche in naher Zukunft den Parkraum verlassen werden, am Rand des Parkraums positioniert werden. Somit entsteht beim Ausparken eines solchen Fahrzeugs am Rand keine Lücke innerhalb der verbleibenden Fahrzeuge. Selbst verständlich können bei der Optimierung des Parkraums auch beliebige weitere Randbedingungen, wie beispielsweise Benutzervorgaben, Einschränkungen der Fahrzeuge o. ä. mitberücksichtigt werden.

Als Parkraum kann hierbei ein beliebiger Bereich angesehen werden, welcher dazu geeignet ist, dass in diesem Bereich Fahrzeuge abgestellt werden können bzw. dürfen. Dabei können sich beispielsweise um eine definierte zusammenhängende Fläche handeln. Darüber hinaus sind als Parkraum auch Bereiche möglich, welche mehrere, gegebenenfalls räumlich voneinander getrennte, separate Flächen zum Abstellen von Fahrzeugen aufweisen. Beispielsweise kann der Parkraum ein Stadtviertel, einen Ortsteil o. ä. mit mehreren darin befindlichen Möglichkeiten zum Abstellen von Fahrzeugen umfassen. Darüber hinaus sind auch beliebige andere Bereiche als Parkraum möglich, welche eine oder mehrere Flächen zum Abstellen von Fahrzeugen aufweisen. Als Parkraum können auch Parkhäuser, Tiefgaragen o. ä. angesehen werden. Insbesondere sind auch Flächen mit mehreren übereinanderliegenden Etagen, beispielsweise mehrstöckige Parkhäuser oder Tiefgaragen möglich.

Die Kommunikation zwischen dem Parkleitsystem und den entsprechenden Komponenten in den Fahrzeugen, insbesondere der Vorrichtung zur Koordination des Parkraums, kann auf beliebige geeignete Weise erfolgen. Beispielsweise kann die Kommunikation mittels drahtloser Kommunikationssysteme wie Bluetooth, WLAN, Mobilfunk (GSM, UMTS, LTE, 5G, etc.) oder ähnlichem erfolgen. Hierbei kann beispielsweise eine direkte Kommunikationsverbindung zwischen der Vorrichtung zur Koordination des Parkraums in dem Fahrzeug und der Kommunikationseinrichtung des Parkleitsystems aufgebaut werden. Zusätzlich oder alternativ ist es auch möglich, die Kommunikationsverbindung über mehrere Zwischenstationen zu führen. Beispielsweise können Nachrichten zunächst von benachbarten Fahrzeugen oder Fahrzeugen in der Umgebung empfangen werden und anschließend können diese Fahrzeuge die empfangenen Nachrichten an das Parkleitsystem oder weitere Fahrzeuge weiterleiten. Auf diese Weise ist gegebenenfalls nur eine sehr geringe Sendeleistung für den Austausch der Nachrichten erforderlich. Insbesondere können für eine solche Kommunikation auch Kommunikationssysteme für eine Fahrzeug-zu-Fahrzeug-Kommunikation (Car-to-Car, C2C) oder eine Kommunikation von einem Fahrzeug zu einer weiteren Komponente (Car to X, C2X) genutzt werden. Grundsätzlich sind jedoch beliebige geeignete Kommunikationsverfahren, insbesondere drahtlose Kommunikationsverfahren zum Austausch zwischen den Fahrzeugen und dem Parkleitsystem möglich.

Gemäß einer Ausführungsform umfasst die Anmeldenachricht eine Kennung des Fahrzeugs, Informationen über eine Position des Parkplatzes, Abmessungen des Parkplatzes, über das Umfeld des Fahrzeugs, eine geplante Parkdauer, einen Ladezustand der Traktionsbatterie, einen Kraftstoffvorrat, und/oder Angaben über die Manövrierfähigkeit des Fahrzeugs. Durch die Spezifikation einer Kennung des Fahrzeugs kann das jeweilige Fahrzeug, dass in dem Parkraum abgestellt werden soll, eindeutig identifiziert werden. Insbesondere kann auf diese Weise auch eine spätere Abmeldung des Fahrzeugs mit dieser Kennung verknüpft werden. Die Angaben zur Abmessung des Parkplatzes können beispielsweise die Fläche spezifizieren, welche durch das Fahrzeug während des Parkvorgangs belegt wird. Beispielsweise kann die Länge und Breite des belegten Parkplatzes in der Anmeldenachricht mitgeteilt werden. Durch die Spezifikation der Position des Parkplatzes kann dem Parkleitsystem mitgeteilt werden, wo sich das abzustellende Fahrzeug befindet und somit welcher Bereich des Parkraums durch das Fahrzeug belegt wird. Die entsprechenden Informationen können zum Beispiel mittels eines Satellitennavigationssystems, wie GPS, Galileo oder ähnlichem, ermittelt werden. Aber auch eine Spezifikation auf Basis digitaler Karte oder ähnlichem ist möglich. Darüber hinaus kann das Fahrzeug beispielsweise das Umfeld um das Fahrzeug an der Parkposition erfassen und Informationen hierüber an das Parkleitsystem übermitteln. Hierzu können beispielsweise in dem Fahrzeug verbaute Sensoren wie Kameras, Ultraschallsensoren, Radar, Lidar o.ä. genutzt werden. Diese Weise können beispielsweise auch Objekte identifiziert werden, die sich in dem Parkraum befinden und gegebenenfalls ein Parken an der Position der Objekte verhindern würden. Ist die geplante Dauer für einen Parkvorgang bekannt, so kann diese gegebenenfalls ebenfalls in der Anmeldenachricht an das Parkleitsystem übermittelt werden. Beispielsweise kann ein Benutzer die geplante Parkzeit über eine Benutzerschnittstelle eingeben. Ferner kann bei Elektrofahrzeugen beispielsweise ein Ladezustand der Traktionsbatterie oder bei Fahrzeugen mit Verbrennungsmotoren der verfügbare Kraftstoff an das Parkleitsystem übermittelt werden. Alternativ kann auch eine daraus resultierende Restreichweite übermittelt werden. Durch diese Information kann das Parkleitsystem gegebenenfalls Anforderungen für ein Umparken des Fahrzeugs einschränken, falls in dem entsprechenden Fahrzeug nur noch eine beschränkte Energiemenge zur Verfügung steht. Angaben über die Manövrierfähigkeit des Fahrzeugs können beispielsweise den Wendekreis des Fahrzeugs spezifizieren oder weitere Angaben über Einschränkungen der Manövrierfähigkeit umfassen. Auf Basis dieser Daten kann das Parkleitsystem gegebenenfalls ermitteln, ob eine Positionsänderung für eine Optimierung des Parkraums für das jeweilige Fahrzeug möglich ist. Darüber hinaus können in der Anmeldenachrichten auch beliebige weitere Informationen übermittelt werden, welche von dem Parkleitsystem ausgewertet und berücksichtigt werden können.

Gemäß einer Ausführungsform umfasst die Abmeldenachricht eine Kennung des Fahrzeugs, Informationen über eine Position und/oder Abmessungen des von dem Fahrzeug zuvor belegten Parkplatzes und/oder Informationen über das Umfeld des von dem Fahrzeug zuvor belegten Parkplatzes. Durch die Verwendung der Kennung für das Fahrzeug kann bei der Abmeldung eine einfache Zuordnung zu der korrespondierenden Anmeldenachricht erfolgen. Entsprechend kann durch das Übermitteln von Positionsdaten sowie gegebenenfalls Abmessungen des belegten Parkraums dem Parkleitsystem mitgeteilt werden, welche Fläche nach dem Ausparken des Fahrzeugs für weitere Fahrzeuge zur Verfügung steht. Analog zu der Erläuterung der Anmeldenachricht kann das Fahrzeug auch vor oder während des Ausparkens das Umfeld sensorisch erfassen und Informationen über das Umfeld an das Parkleitsystem übermitteln. Somit können dem Parkleitsystem auf einfache Weise auch Objekte und Behinderungen im Bereich des ausparkenden Fahrzeugs zur Verfügung gestellt werden.

Gemäß einer Ausführungsform ist die Kommunikationsvorrichtung des Parkleitsystems dazu ausgelegt, eine Anfrage für eine Parkposition von einem weiteren Fahrzeug zu empfangen. Beispielsweise kann das weitere Fahrzeug bei einer Annäherung an den Parkraum eine solche Anfrage aussenden. Die Anfrage kann entweder automatisch beim Annähern an den Parkraum ausgesendet werden. Alternativ kann auch ein Benutzer manuell eine solche Anfrage initiiert. Entsprechend kann die Verarbeitungsvorrichtung dazu ausgelegt sein, eine Parkposition für das weitere Fahrzeug in dem Parkraum zu ermitteln. Beispielsweise kann die Verarbeitungseinrichtung eine Parkposition ermitteln, welche sich möglichst nahe an der aktuellen Position des weiteren Fahrzeugs befindet. Darüber hinaus ist es jedoch auch möglich, dass die Verarbeitungseinrichtung in dem verfügbaren Parkraum eine Parkposition ermittelt, welche für die Konfiguration des weiteren Fahrzeugs eine optimale Ausnutzung des verfügbaren Parkraums ermöglicht. Die Kommunikationsvorrichtung des Parkleitsystems kann hierbei ferner dazu ausgelegt sein, Informationen bezüglich der ermittelten Parkposition an das weitere Fahrzeug zu übertragen. Somit stehen dem weiteren Fahrzeug auf komfortable Weise Angaben für die von dem Parkleitsystem automatisch ermittelte geeignete Parkposition zur Verfügung. Dies kann entweder dem Fahrzeugführer angezeigt werden, oder alternativ kann das Fahrzeug daraufhin auch automatisch die entsprechende Parkposition ansteuern und das Fahrzeug parken.

Gemäß einer Ausführungsform sind die Komponenten des Parkleitsystems in einer ortsfesten stationären Infrastruktur angeordnet. Beispielsweise können die Komponenten des Parkleitsystems, wie die Kommunikationseinrichtung und die Verarbeitungseinrichtung, als dezidierte Einheit ausgeführt sein. Diese Einheit kann beispielsweise am Rand oder innerhalb des Parkraums vorgesehen sein.

Gemäß einer Ausführungsform umfasst das Parkleitsystem mindestens einem Umfeldsensor. Dieser Umfeldsensor kann dazu ausgelegt sein, den Parkraum zu überwachen. Beispielweise kann es sich bei dem Umfeldsensor um eine Kamera oder ein Kamerasystem mit mehreren Kameras handeln. Darüber hinaus sind jedoch auch beliebige andere geeignete Sensoren möglich, die den Parkraum überwachen, um beispielsweise die in dem Parkraum abgestellten Fahrzeuge oder gegebenenfalls auch weitere Objekte in dem Parkraum zu identifizieren. Die von dem Umfeldsensor bereitgestellten Sensordaten können von der Verarbeitungseinrichtung ausgewertet werden und dieser gewonnenen Daten können in die Ermittlung der optimalen Anordnung der Fahrzeuge in dem Parkraum einfließen. Somit können auch Fahrzeuge oder Objekte in dem Parkraum berücksichtigt werden, bei welchen keine automatische Anmeldung oder Abmeldung implementiert ist.

Gemäß einer Ausführungsform ist das Parkleitsystem dazu ausgelegt, in einem ganz oder zumindest teilweise autonom fahrenden Fahrzeug angeordnet zu werden. Mit anderen Worten, die Funktonalität des Parkleitsystems wird durch Komponenten innerhalb eines oder mehrerer Fahrzeuge realisiert. Auf diese Weise können sich beispielsweise mehrere Fahrzeuge gegenseitig abstimmen, um eine optimale Parkposition innerhalb eines Parkraums zu ermitteln. Somit ist keine zentrale Einheit für ein dezidiertes Parkleitsystem erforderlich.

Gemäß einer Ausführungsform ist die Vorrichtung zur Koordination des Parkraums dazu ausgelegt, eine Anforderung zum Wechsel des Parkplatzes zu empfangen. Entsprechend kann die Vorrichtung zur Koordination des Parkraums dazu ausgelegt sein, ein ganz oder zumindest teilweise autonom fahrendes Fahrzeug, in welchem die Vorrichtung implementiert ist, unter Verwendung der empfangenen Anforderung zu veranlassen, einen Wechsel des Parklatzes auszuführen. Auf diese Weise können die Fahrzeuge innerhalb des Parkraums automatisch derart angeordnet werden, dass der zur Verfügung stehende Parkraum optimal ausgenutzt wird.

Gemäß einer Ausführungsform ist die Vorrichtung zur Koordination des Parkraums dazu ausgelegt, eine Benachrichtigung auszusenden, falls eine Anforderung zum Wechsel des Parkplatzes empfangen worden ist. Beispielsweise kann eine solche Benachrichtigung an ein mobiles Endgerät eines Benutzers, wie zum Beispiel ein Smartphone o. ä., gesendet werden. Somit wird der Benutzer automatisch darüber informiert, dass sein Fahrzeug die Position innerhalb des Parkraums wechselt.

Gemäß einer Ausführungsform ist Vorrichtung zur Koordination des Parkraums dazu ausgelegt, eine Benutzerfreigabe für den Wechsel des Parkplatzes zu empfangen. In diesem Fall kann das Fahrzeug erst dann dazu veranlasst werden einen Wechsel des Parklatzes auszuführen, nachdem die Benutzerfreigabe für den Wechsel des Parkplatzes zu empfangen worden ist. Somit behält der Benutzer steht die Kontrolle über die von seinem Fahrzeug auszuführenden Aktionen, selbst wenn dieses in der Lage ist, vollständig autonom zu navigieren. Die Benutzerfreigabe kann beispielsweise über dasselbe mobile Endgerät erfolgen, über welches der Benutzer zuvor über einen möglichen Wechsel der Position des Fahrzeuges informiert worden ist.

Gemäß einer Ausführungsform ist Vorrichtung zur Koordination des Parkraums dazu ausgelegt, eine Benutzeranforderung zu empfangen. Bei dieser Benutzeranforderung kann es sich beispielsweise um eine Anforderung eines Benutzers handeln, um das Fahrzeug autonom zu einer vorbestimmten Position navigiert. Entsprechend kann das ganz oder zumindest teilweise autonom fahrende Fahrzeug unter Verwendung der empfangenen Benutzeranforderung dazu veranlasst werden eine in der Benutzeranforderung spezifizierte Position anzusteuern. Somit kann beispielsweise das Fahrzeug auf Nutzeranforderung automatisch seine Parkposition verlassen und zu einer von dem Benutzer spezifizierten Position fahren. In diesem Fall ist es für den Benutzer nahezu unerheblich, zu welcher Position das Fahrzeug durch das Parkleitsystem während des Parkvorgangs navigiert worden ist, da der Benutzer sein Fahrzeug an einer von ihm spezifizierten Position wieder in Empfang nehmen kann.

Gemäß einer Ausführungsform werden die optimalen Parkpositionen unter Verwendung von Informationen über Abmessungen der Fahrzeuge in dem Parkraum, erwarteter Parkdauer, einem zu erwartenden zukünftigen Parkplatzbedarf und/oder einer Verkehrssituation in der Umgebung des Parkraums ermittelt. Darüber hinaus können auch beliebige weitere Informationen mit zur Ermittlung der optimalen Anordnung von Fahrzeugen innerhalb des Parkraums in Betracht gezogen werden.

Die obigen Ausgestaltungen und Weiterbildungen lassen sich, soweit sinnvoll, beliebig miteinander kombinieren. Weitere Ausgestaltungen, Weiterbildungen und Implementierungen der Erfindung umfassen auch nicht explizit genannte Kombinationen von zuvor oder im Folgenden bezüglich den Ausführungsbeispielen beschriebenen Merkmalen der Erfindung. Insbesondere wird der Fachmann auch Einzelaspekte als Verbesserungen oder Ergänzungen zu den jeweiligen Grundformen der Erfindung hinzufügen.

### Kurze Beschreibung der Zeichnungen

Weitere Merkmale und Vorteile der Erfindung werden nachfolgend anhand der Figuren erläutert. Dabei zeigen:
Fig. 1: eine schematische Darstellung eines Parkraums mit einem Parkleitsystem gemäß einer Ausführungsform;
Fig. 2: eine schematische Darstellung Blockschaubilds eines Parkleitsystems gemäß einer Ausführungsform;
Fig. 3: eine schematische Darstellung der Kommunikation zwischen einem Parkleitsystem und Fahrzeugen gemäß einer Ausführungsform;
Fig. 4: eine schematische Darstellung der Kommunikation zwischen Fahrzeugen gemäß weiteren einer Ausführungsform;
Fig. 5: eine schematische Darstellung der Kommunikation zwischen Fahrzeugen gemäß noch einer weiteren Ausführungsform; und
Fig. 6: eine schematische Darstellung eines Ablaufdiagrams, wie er einem Verfahren zur Koordination eines Parkraums gemäß einer Ausführungsform zugrunde liegt.

### Beschreibung von Ausführungsformen

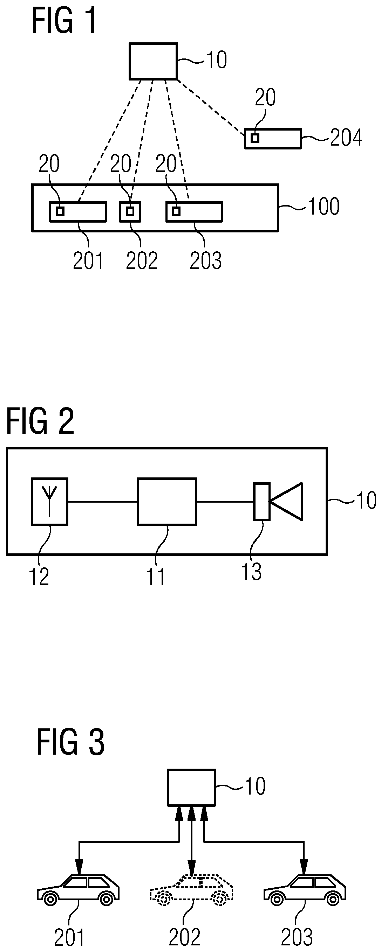

Figur 1 zeigt eine schematische Darstellung eines Parkraums 100, wie er beispielsweise durch ein Parkleitsystem 10 gemäß einer Ausführungsform überwacht und optimiert werden kann. Auch wenn der Parkraum 100 in Figur 1 als eine einzelne zusammenhängende Fläche dargestellt ist, so ist die vorliegende Erfindung nicht darauf beschränkt. Vielmehr kann der zu überwachende Parkraum 100 eine beliebige Ausgestaltung aufweisen. Insbesondere kann der Parkraum 100 auch mehrere voneinander räumlich getrennte Bereiche umfassen. Beispielsweise kann der zu überwachende Parkraum 100 eine oder mehrere Parkflächen in einem vorbestimmten Gebiet, beispielsweise einem Stadtviertel, Ortsteil oder ähnlichem umfassen. Darüber hinaus kann der zu überwachende Parkraum 100 beispielsweise auch eine oder mehrere Etagen eines Parkhauses, einer Tiefgarage oder ähnlichem umfassen. Ebenso ist die in Figur 1 dargestellte Anzahl von drei geparkten Fahrzeugen 201,202 und 203 lediglich beispielhaft zu verstehen und stellt keine Einschränkung der vorliegenden Erfindung dar.

Wird ein Fahrzeug 201, 202 oder 203 in dem zu überwachenden Parkraum 100 geparkt, so kann das entsprechende Fahrzeug 201, 202 oder 203 vor, während oder unmittelbar nach dem Einparkvorgang eine Anmeldenachricht an ein Parkleitsystem 10 übermitteln. Die Anmeldenachrichten können beispielsweise über eine drahtlose Kommunikationsverbindung zwischen dem jeweiligen Fahrzeug 201, 202 oder 203 und dem Parkleitsystem 10 übermittelt werden. Verschiedene Ansätze zur Kommunikation zwischen dem Parkleitsystem 10 und den Fahrzeugen 201, 202 oder 203 werden nachfolgend noch detaillierter beschrieben.

Die Anmeldenachricht kann beispielsweise Angabe über die Position umfassen, an welcher das entsprechende Fahrzeug 201, 202 oder 203 geparkt wird. Diese Position kann grundsätzlich auf beliebige Weise durch entsprechende Komponenten des Fahrzeugs 201, 202 oder 203 ermittelt werden. Beispielsweise kann das Fahrzeug über die Position unter Verwendung eines Satellitennavigationssystems, wie zum Beispiel GPS, Galileo o.ä., ermitteln. Darüber hinaus sind auch beliebige andere Verfahren möglich, um die entsprechenden Position des Fahrzeugs 201, 202 oder 203 innerhalb des Parkraums 10 zu ermitteln.

Ferner kann die Anmeldenachricht auch Angaben über den durch das jeweilige Fahrzeug 201, 202 oder 203 belegten Bereich umfassen. Hierzu können beispielsweise die in dem Fahrzeug 201, 202 oder 203 hinterlegten Abmessungen des jeweiligen Fahrzeugs 201, 202 oder 203 in der Anmeldenachricht übermittelt werden. Darüber hinaus kann beispielsweise auch die Ausrichtung bzw. Orientierung des Fahrzeugs 201, 202 oder 203 in der Anmeldenachricht übermittelt werden. Auf diese Weise kann das Parkleitsystem 10 den durch die übermittelte Anmeldenachricht spezifizierten Bereich in dem Parkraum 10 als belegt registrieren.

Darüber hinaus kann die Abmeldenachricht auch beliebige weitere Informationen umfassen. Beispielsweise kann eine fahrzeugspezifische oder benutzerspezifische Kennung übermittelt werden. Mit einer solchen Kennung ist eine entsprechende Zuordnung des belegten Bereichs in dem Parkraum 100 möglich. Beispielsweise kann hierzu überprüft werden, ob der Benutzer bzw. das Fahrzeug autorisiert ist, in dem jeweiligen Parkraum zu parken. Gegebenenfalls können unter Verwendung einer solchen Kennung auch Zusatzdienste, wie beispielsweise das Freigeben einer an der jeweiligen Parkposition befindlichen Ladestation zum Aufladen eines Elektrofahrzeugs, freigegeben werden. Darüber hinaus können derartige benutzer- oder fahrzeugspezifische Kennungen auch zu Abrechnungszwecken oder ähnlichem genutzt werden.

Ferner kann das Fahrzeug 201, 202 oder 203 während oder nach dem Einparkvorgang mittels geeigneter Sensoren das Fahrzeugumfeld erfassen. Beispielweise können hierzu in dem Fahrzeug vorhandene Sensoren wie Kameras, Ultraschallsensoren, Radarsensoren, Lidar o. ä. genutzt werden. Hierdurch können beispielsweise Begrenzungen, Hindernisse, wie beispielsweise ein nicht registrierter Fahrzeuganhänger o.ä., oder auch nicht bei dem Parkleitsystem 10 registrierte Fahrzeuge erfasst werden. In diesem Fall kann das Fahrzeug 201, 202 oder 203 in seiner Abmeldenachricht auch Informationen über das Fahrzeugumfeld an das Parkleitsystem 10 übermitteln. Daraufhin kann das Parkleitsystem 10 beispielsweise auch den noch verfügbaren Bereich in dem Parkraum 100 unter Verwendung dieser zusätzlichen Information über das Fahrzeugumfeld anpassen.

Weiterhin kann die Anmeldenachricht beispielsweise auch Informationen über eine geplante Parkdauer des jeweiligen Fahrzeugs 201, 202 oder 203 umfassen. Beispielsweise kann ein Benutzer mittels einer in dem Fahrzeug vorgesehenen Benutzerschnittstelle die geplante Parkdauer manuell eingeben. Gegebenenfalls sind jedoch auch automatisierte Verfahren, insbesondere Verfahren auf Basis von künstliche Intelligenz oder ähnlichem möglich, welche beispielsweise auf Grundlage von früheren Erfahrungswerten eine zu erwartende Parkdauer abschätzen können.

Die Anmeldenachricht kann darüber hinaus auch beliebige andere Informationen, beispielsweise Informationen über das jeweilige Fahrzeug 201, 202 oder 203 umfassen. Zum Beispiel können Informationen über die Manövrierfähigkeit des Fahrzeugs 201, 202 oder 203, wie beispielsweise Wendekreis o.ä. spezifiziert werden. Ferner kann die Abmeldenachricht beispielsweise auch Angaben über die im Fahrzeug 201, 202 oder 203 vorhandene Kraftstoffmenge oder den Ladezustand einer Batterie in einem Elektrofahrzeug umfassen. Alternativ kann beispielsweise auch eine zu erwartende Restreichweite des jeweiligen Fahrzeugs 201, 202 oder 203 übermittelt werden.

Verlässt eine Fahrzeug 201, 202 oder 203 den Parkraum 100, so kann es vor, während oder nach dem Ausparken eine Abmeldenachricht an das Parkleitsystem 10 übermitteln. Mit dieser Abmeldenachricht teilte das jeweilige Fahrzeug 201, 202 oder 203 dem Parkleitsystem 10 mit, dass der durch das Fahrzeug 201, 202 oder 203 belegte Bereich in dem Parkraum 100 wieder frei ist und somit von weiteren Fahrzeugen genutzt werden kann. Beispielsweise kann sich das Fahrzeug 201, 202 oder 203 in dieser Abmeldenachricht durch seine jeweilige Kennung identifizieren. Ferner ist es auch möglich, dass das Fahrzeug 201, 202 oder 203 in seiner Abmeldenachricht die Position während des Parkvorgangs übermittelt. Das Fahrzeug 201, 202 oder 203 kann ferner unmittelbar vor dem Ausparken oder auch während des Ausparken mittels der bereits zuvor beschriebenen Sensoren das Fahrzeugumfeld erfassen und entsprechende Informationen über das Fahrzeugumfeld mit der Abmeldenachricht an das Parkleitsystem übermitteln. Entsprechend kann das Parkleitsystem 10 den verfügbaren Bereich in dem Parkraum 100 unter Verwendung der in der Abmeldenachricht spezifizierten Informationen aktualisieren.

Da die in dem Parkraum 100 abgestellten Fahrzeugen 201, 202 oder 203 unterschiedliche Abmessungen aufweisen können, ist auch die für das jeweilige Fahrzeug 201, 202 oder 203 mindestens erforderliche Parkfläche unterschiedlich groß. Wie beispielsweise in Figur 1 erkennen ist, benötigt das mittlere Fahrzeug 202 eine kleinere Fläche, als die größeren Fahrzeugen 201 und 203. Für eine optimale Ausnutzung des Parkraums 100 können die einzelnen Fahrzeuge dabei derart positioniert werden, dass von jedem Fahrzeug 201, 202 oder 203 nur eine minimal erforderliche Parkfläche beansprucht wird. Wird nun beispielsweise das mittlere Fahrzeug 202 ausgeparkt, während die beiden anderen Fahrzeugen 201 und 203 noch stehen bleiben, so entsteht zwischen diesen beiden Fahrzeugen 201 und 203 eine Lücke, die jedoch nur für ein Fahrzeug ausreicht, welches nicht größer ist, als das zuvor an dieser Position geparkte Fahrzeug 202. Daher ist eine solche Lücke nicht ausreichend groß, um ein größeres Fahrzeug, wie beispielsweise das in Figur 1 dargestellte Fahrzeug 204, in einer solchen Lücke parken zu können.

Das Parkleitsystem 10 kann, wie zuvor bereits beschrieben, auf Grundlage der Anmeldenachrichten und Abmeldenachricht von den Fahrzeugen 201, 202 oder 203 die freien Bereiche sowie die durch die Fahrzeuge 201, 202 oder 203 belegten Bereiche in dem Parkraum 100 ermitteln. Darüber hinaus kann das Parkleitsystem 10 auf Grundlage der Anmeldenachrichten und Abmeldenachricht sowie gegebenenfalls auch auf Grundlage von in dem Parkleitsystem 10 hinterlegten weitere Informationen über den Parkraum 100 eine Anordnung der Fahrzeuge in dem Parkraum 100 ermitteln, um eine möglichst optimale Ausnutzung des Parkraums 100 zu erzielen.

Entsteht beispielsweise in dem in Figur 1 dargestellten Beispiel durch das Ausparken des mittleren Fahrzeugs 202 eine Lücke, so kann das Parkleitsystem 10 daraufhin eine Verarbeitung zur Optimierung der Fahrzeugpositionen in dem Parkraum 100 durchführen. Beispielsweise kann für die noch in dem Parkraum 100 verbliebenen Fahrzeugen 201 und 203 jeweils eine Position ermittelt werden, die zu möglichst geringen Zwischenräumen zwischen den einzelnen verbliebenen Fahrzeugen 201, 203 führt. Dies kann beispielsweise in dem in Figur 1 dargestellten Beispiel dadurch erzielt werden, dass das rechte Fahrzeug 203 näher an das linke Fahrzeug 201 herangerückt wird. Hierdurch entsteht rechts von dem neu positionieren Fahrzeug 203 ein Bereich, der auch von größeren Fahrzeugen, wie beispielsweise dem Fahrzeug 204 genutzt werden kann.

Darüber hinaus kann die Optimierung des Parkraums 100 durch das Parkleitsystem 10 auch unter Berücksichtigung beliebiger weiterer geeigneter Bedingungen ausgeführt werden. Beispielsweise kann bei der Ermittlung einer optimierten Positionierung der Fahrzeuge in dem Parkraum 100 auch die geplante Parkdauer bzw. die zu erwartende Abfahrtzeit der einzelnen Fahrzeuge berücksichtigt werden. Beispielsweise können Fahrzeuge, welche den Parkraum 100 früher verlassen wollen, näher an einer Ausfahrt bzw. einem Ausgang des Parkraums 100 positioniert werden. Ebenso ist es beispielsweise möglich, die Optimierung der Positionierung für die Fahrzeuge in dem Parkraum 100 derart auszuführen, dass beim Verlassen bzw. Ausparken von Fahrzeugen, welche erwartungsgemäß als nächste den Parkraum verlassen werden, keine Lücken entstehen, die eine sofortige erneute Optimierung des Parkraums bzw. Repositionierung von Fahrzeugen in dem Parkraum erforderlich machen würden.

Darüber hinaus können auch beliebige weitere Rahmenbedingungen mitberücksichtigt werden. Beispielsweise kann für ein Fahrzeug ein Bereich innerhalb des Parkraums 100 spezifiziert werden, innerhalb dessen eine Repositionierung des Fahrzeuges möglich ist und/oder ein Bereich innerhalb dessen das Fahrzeug nicht positioniert werden soll. Ebenso können bei der Optimierung des Parkraums 100 und damit verbundenen Anforderungen für die Repositionierung der Fahrzeuge auch die Eigenschaften der Fahrzeuge, wie Manövrierfähigkeit, insbesondere Wendekreis, verfügbare Restreichweite aufgrund von Kraftstoff oder Ladezustand sowie beliebige weitere fahrzeugspezifische Eigenschaften berücksichtigt werden.

Nachdem durch das Parkleitsystem 10 eine Optimierung des Parkraums ausgeführt worden ist, kann das Parkleitsystem 10 an ein oder mehrere ganz oder zumindest teilweise autonom fahren Fahrzeuge in dem Parkraum 100 eine Aufforderung zum Wechsel der Parkposition senden. Diese Aufforderungen kann beispielsweise Informationen über die neu einzunehmen Position sowie gegebenenfalls auch die Ausrichtung des Fahrzeugs an der neu einzunehmen Position umfassen. Ferner kann die Aufforderung beispielsweise auch detailliertere Informationen, wie zum Beispiel eine während der Repositionierung zu fahrende Route, umfassen.

Gegebenenfalls kann das Parkleitsystem 10 bei einer solchen Optimierung des Parkraums 100 durch Repositionierung einzelner Fahrzeuge innerhalb des Parkraums 100 auch eine Reihenfolge für die Repositionierung der einzelnen Fahrzeuge ermitteln. Insbesondere kann hierbei eine Reihenfolge für die Repositionierung ermittelt werden, die beispielsweise eine möglichst geringe Anzahl von Fahrbewegungen erfordert.

Hat ein Benutzer beispielsweise bei der Nutzung des Parkraums 100 direkt oder indirekt einer Repositionierung bereits zugestimmt, so kann das Parkleitsystem 10 die ganz oder zumindest teilweise autonom fahrenden Fahrzeuge innerhalb des Parkraums 100 direkt auffordern, die Parkposition gemäß der ermittelten optimalen Anordnung einzunehmen. Beispielsweise kann ein Benutzer beim Abstellen seines Fahrzeugs über eine Benutzerschnittstelle einer solchen Repositionierung seines Fahrzeugs zustimmen. Alternativ kann auch bei der Nutzung des Parkraums 100 von einer impliziten Zustimmung einer solchen Repositionierung ausgegangen werden.

Ferner ist es auch möglich, dass der Benutzer eines Fahrzeugs vor einer geplanten Repositionierung seines Fahrzeugs innerhalb des Parkraums 100 über die geplante Repositionierung informiert wird. Hierzu kann beispielsweise von dem Parkleitsystem 10 oder einer Kommunikationseinheit innerhalb seines Fahrzeuges eine Nachricht ausgesendet werden. Diese Nachricht kann zum Beispiel von einem mobilen Endgerät, wie einem Smartphone oder ähnlichem, empfangen werden. Die Nachricht kann beispielsweise eine Information über den neuen Standort des Fahrzeugs innerhalb des Parkraums 100 umfassen. Hat der Benutzer zuvor einer möglichen Repositionierung seines Fahrzeugs direkt oder indirekt zugestimmt, so ist eventuell eine solche Information des Benutzers ausreichend.

Alternativ ist es auch möglich, dass vor der Repositionierung des Fahrzeuges eine ausdrückliche Zustimmung des Benutzers erfolgen muss. In einem solchen Fall kann das Parkleitsystem 10 oder das Fahrzeug, welches bewegt werden soll, eine Nachricht an einen Benutzer übermitteln, in welcher der Benutzer über die geplante Repositionierung informiert wird. Der Benutzer kann daraufhin eine Freigabe für diese geplante Repositionierung erteilen und eine entsprechende Bestätigung zurück an das Parkleitsystem 10 oder sein Fahrzeug senden. Dieser Vorgang kann beispielsweise mittels einer Applikation (App) auf einem Smartphone oder ähnlichem erfolgen. Nach Empfang dieser Freigabe kann der Repositionierungsvorgang des Fahrzeuges gestartet werden. Gegebenenfalls ist es auch möglich, dass ein Benutzer zwischen mehreren optionalen Positionen innerhalb des Parkraums 100 wählen kann, an denen das Fahrzeug neu positioniert werden soll.

Möchte ein Benutzer sein Fahrzeug nicht an der Parkposition innerhalb des Parkraums 100 abholen, so ist es gegebenenfalls auch möglich, dass der Benutzer sein ganz oder zumindest teilweise autonom fahrendes Fahrzeug auffordert zu einer vorgegebenen Position zu navigieren. Hierzu kann der Benutzer beispielsweise eine Benutzeranforderung an das entsprechende Fahrzeug senden und das Fahrzeug navigiert daraufhin autonom zu der von dem Benutzer spezifizierten Position. Da autonom fahrende Fahrzeuge gegebenenfalls in der Lage sind, in dem Korridor einer vorgesehenen Fahrstrecke mit hoher Prozession zu navigieren, können in solchen Fällen innerhalb des Parkraums 100 möglichst schmale Fahrspuren vorgesehen sein. Damit sinkt der Platzbedarf für die Fahrspuren innerhalb des Parkraums 100, sodass der Parkraum 100 ebenfalls effizienter ausgenutzt werden kann.

Auch ist es beispielsweise möglich, dass ein Fahrzeug von einem Benutzer aus dem Parkraum 100 zu einem vorgegebenen Ort abgerufen wird, wenn der Benutzer das Fahrzeug benötigt. Dabei ist es grundsätzlich unerheblich, ob der Benutzer das Fahrzeug in der unmittelbaren Nähe des Parkraums 100 benötigt, oder gegebenenfalls auch an einem weiter entfernten Ort. Beispielsweise kann ein Fahrzeug zunächst in einem Parkraum 100 am Stadtrand abgestellt werden. Daraufhin kann der Benutzer innerhalb des Stadtgebietes seine Erledigungen tätigen und anschließend sein Fahrzeug zu sich heranrufen. Ebenso ist es Beispiel sollte möglich, dass ein Benutzer sein Fahrzeug in einem Parkraum in einem ersten Bereich abstellt, daraufhin eine größere Strecke zurückgelegt, beispielsweise eine Wanderung zu einem anderen Ort, und anschließend das Fahrzeug zu seinem Zielort heranruft.

Für das Abstellen des Fahrzeugs in dem Parkraum 100 sind ebenfalls unterschiedliche Ansätze möglich. Beispielsweise kann ein Benutzer sein Fahrzeug manuell an einer beliebigen Position innerhalb des Parkraums 100 abstellen. Daraufhin kann bei Bedarf das Parkleitsystem 10 das abgestellte Fahrzeug autonom zu einer geeigneten Parkposition navigieren, nachdem der Benutzer sein Fahrzeug bereits verlassen hat. Alternativ kann beim Erreichen des Parkraums 100 zunächst eine Anfrage an das Parkleitsystem 10 gesendet werden. Diese Anfrage kann beispielsweise die aktuelle Position des Fahrzeuges, Angabe über das Fahrzeug, wie zum Beispiel Abmessungen, Antriebsart (Verbrennungsmotor oder Elektrofahrzeug) sowie beliebige weitere Angaben tun umfassen. Daraufhin kann das Parkleitsystem 10 bereits eine möglichst geeignete initiale Parkposition für das jeweilige Fahrzeug ermitteln. Diese initiale Parkposition kann an das Fahrzeug übermittelt werden. Beispielsweise kann die initiale Parkposition einem Benutzer angezeigt werden, sodass der Benutzer zunächst manuell an diese vorgegebene Parkposition fährt. Alternativ kann auch ein ganz oder zumindest teilweise autonom fahrendes Fahrzeug selbstständig zu der vorgegebenen Parkposition navigieren. Handelt es sich bei dem Fahrzeug beispielsweise mein Elektrofahrzeug, so kann, falls ein Ladebedarf besteht, auch vorzugsweise eine Parkposition mit einer Lademöglichkeit ausgewählt werden.

Steht gegebenenfalls aktuell in dem Parkraum 100 kein geeigneter Parkplatz für das Fahrzeug zur Verfügung, so ist es eventuell auch möglich, dass das Fahrzeug autonom, also ohne Fahrzeugführer, sich in der Umgebung des Parkraums 100 im Verkehrsraum bewegt, bis ein geeigneter Platz zum Parken des Fahrzeugs in dem Parkraum 100 verfügbar ist. Hierbei kann beispielsweise auch eine aktuelle Verkehrssituation in der Umgebung des Parkraums 100 mitberücksichtigt werden.

Das Parkleitsystem 10 kann beispielsweise in einer ortsfesten stationären Infrastruktur vorgesehen sein. Beispielsweise kann das Parkleitsystem 10 am Rand oder innerhalb des Parkraums 100 als ortsfeste Einheit implementiert werden. Alternativ ist es jedoch auch grundsätzlich möglich, dass die Funktionalität des Parkleitsystem 10 mittels Komponenten in den Fahrzeugen realisiert wird, die in dem Parkraum 100 abgestellten sind. Beispielsweise kann sich Fahrzeuge in einem vordefinierten Bereich automatisch abstimmen, um den Parkraum ein diesem Bereich durch autonomes Navigieren zu optimieren.

Figur 2 zeigt eine schematische Darstellung eines Blockschaubilds eines Parkleitsystems 10 gemäß einer Ausführungsform. Das Parkleitsystem 10 kann beispielsweise eine Kommunikationseinrichtung 12 und eine Verarbeitungseinrichtung 11 umfassen. Die Kommunikationseinrichtung 12 kann die Anmeldenachrichten und die Abmeldenachrichten von den Fahrzeugen empfangen sowie die Aufforderungen zum Wechsel der Parkpositionen für die Fahrzeuge aussenden. Darüber hinaus kann die Kommunikationseinrichtung 12 auch bei Bedarf Benachrichtigungen über geplante Repositionierungen der Fahrzeuge an die jeweiligen Benutzer der Fahrzeuge aussenden und gegebenenfalls Freigaben für die geplanten Repositionierungen empfangen. Ferner kann die Kommunikationseinrichtung 12 auch für beliebige weitere Kommunikationsaufgaben genutzt werden. Die Kommunikation erfolgt vorzugsweise über eine beliebige drahtlose Kommunikationsverbindung. Beispielsweise kann die Kommunikation mittels Mobilfunk (GSM, LTE, UMTS, 5G, etc.), WLAN, Bluetooth oder einen beliebigen anderen drahtlosen Kommunikationsstandard erfolgen.

Die Verarbeitungseinrichtung 11 kann die von der Kommunikationseinrichtung 12 empfangenen Nachrichten, insbesondere die Abmeldenachrichten und die Abmeldenachrichten verarbeiten und auswerten. Hierbei kann die Verarbeitungseinrichtung 11 beispielsweise auf Grundlage der Informationen in den empfangenen Nachrichten die jeweilige Belegung des Parkraums 100 ermitteln. Ferner kann die Verarbeitungseinrichtung 11 für die in dem Parkraum 100 abgestellten Fahrzeugen eine optimale Positionierung bestimmen. Hierzu können beliebige geeignete Optimierungsansätze genutzt werden. Beispielsweise kann die Anordnung der Fahrzeuge innerhalb des Parkraums 100 derart optimiert werden, dass ein möglichst geringer Platzbedarf erforderlich ist, sodass eine möglichst große Anzahl von Fahrzeugen innerhalb des Parkraums 100 abgestellt werden kann. Darüber hinaus können, wie zuvor bereits ausgeführt, auch beliebige weitere Rahmenbedingungen für die Optimierung mit einbezogen werden. So kann beispielsweise eine geplante Parkdauer und eine daraus resultierende Abfahrtszeit der Fahrzeuge berücksichtigt werden. Ferner können Benutzervorgaben für gewünschte Bereich innerhalb des Parkraums berücksichtigt werden. Ebenso kann beispielsweise berücksichtigt werden, dass ein Elektrofahrzeug während des Parkvorgangs zumindest zeitweise an einer (automatisch agierenden) Ladestation aufgeladen werden soll. Ferner können bei der Repositionierung auch Einschränkungen in der Manövrierfähigkeit, der verfügbaren Antriebsenergie (Kraftstoff oder Ladezustand) sowie beliebige weitere Bedingungen berücksichtigt werden.

Gegebenenfalls kann das Parkleitsystem 10 auch einen oder mehrere Umgebungssensoren 13 umfassen. Diese Umgebungssensoren 13 können den Parkraum 100 überwachen. Insbesondere können durch diese Umgebungssensoren 13 neben den in dem Parkraum 10 abgestellten Fahrzeugen auch weitere Hindernisse detektiert werden, welche zum Beispiel Teilbereiche des Parkraums 10 blockieren. Bei den Umgebungssensoren 13 kann es sich um beliebige geeignete Umgebungssensoren, wie beispielsweise Kameras, Ultraschallsensoren, Radarsysteme o. ä., handeln. Entsprechend kann die Verarbeitungseinrichtung 11 auch die Sensorsignale dieser Umgebungssensoren 13 mit berücksichtigen.

Zum Datenaustausch zwischen dem Parkleitsystem 10 und den Fahrzeugen 201-204 kann in den Fahrzeugen 201 -204 jeweils eine Vorrichtung 20 zur Koordination des Parkraums 100 vorgesehen sein. Diese Vorrichtung 20 kann mittels einer geeigneten Kommunikationsschnittstelle eine Datenverbindung zu dem Parkleitsystem 10 aufbauen. Über diese Datenverbindungen können Anmeldenachrichten, Abmeldenachricht sowie beliebige weitere Daten übertragen werden. Gegebenenfalls kann in der Vorrichtung 20 zur Koordination des Parkraums 100 auch eine Benutzerschnittstelle vorgesehen sein. Über eine solche Benutzerschnittstelle kann ein Benutzer beispielsweise Daten, wie geplante Parkdauer, Einschränkungen für eine Repositionierung des Fahrzeugs während des Parkvorgangs o. ä., spezifizieren.

Der Datenaustausch zwischen den Fahrzeugen 201-204, insbesondere zwischen den Vorrichtungen 20 zur Koordination des Parkraums 100 und dem Parkleitsystem 10 kann über eine beliebige, zuvor bereits genannte, drahtlose Kommunikationsverbindung erfolgen. Hierbei kann die Kommunikation beispielsweise direkt zwischen der jeweiligen Vorrichtung 20 zur Koordination des Parkraums 100 und dem Parkleitsystem 100 erfolgen, wie dies beispielsweise in Figur 3 dargestellt ist.

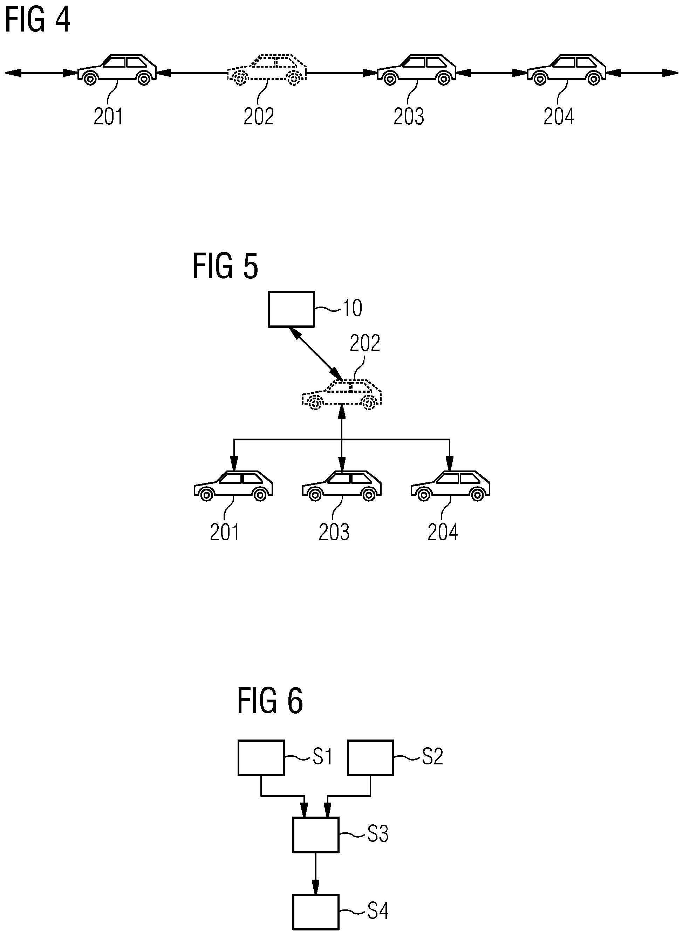

Ferner ist es auch möglich, dass die einzelnen Fahrzeugen 201-204, insbesondere die jeweiligen Vorrichtungen 20 zur Koordination Parkraums 100 in den Fahrzeugen 201-204, jeweils Daten von anderen, benachbarten Fahrzeugen 201-204 empfangen und diese Daten daraufhin an weitere Fahrzeuge 201-204 oder an das Parkleitsystem 10 weiterleiten. Diese Weise kann eine verkettete Fahrzeug-zu-Fahrzeug-Kommunikation (Car-to-Car, C2C) realisiert werden, wie dies beispielsweise in Figur 4 dargestellt ist.

Analog kann auch ein Fahrzeug 201-204 Nachrichten von dem Parkleitsystem 10 empfangen und diese Nachrichten an ein oder mehrere weitere Fahrzeuge von 201-204 weiterleiten, wie dies beispielsweise in Figur 5 dargestellt ist. Auch hierbei ist es möglich, dass die Nachrichten von dem Parkleitsystem 10 über ein oder mehrere Fahrzeug 201-104 zur weiteren Fahrzeugen 201-204 weitergeleitet werden.

Figur 6 zeigt ein Ablaufdiagramm, wie es einem Verfahren zur Koordination eines Parkraums 100 gemäß einer Ausführungsform zugrunde liegt. Das Verfahren kann grundsätzlich beliebige Schritte umfassen, die zur Realisierung des zuvor beschriebenen Konzeptes erforderlich sind. Analog können auch die zuvor beschriebenen Ausführungsformen beliebige Komponenten umfassen, die zur Implementierung des nachfolgend beschriebenen Verfahrens erforderlich sind.

Das Verfahren zur Koordination des Parkraums 100 umfasst einen Schritt S1 zum Empfangen von Anmeldenachrichten von Fahrzeugen, die in dem Parkraum 100 geparkt werden. Diese Anmeldenachrichten werden von Fahrzeugen vor, während oder unmittelbar nach einem Parkvorgang in dem Parkraum 100 ausgesendete. Die Nachrichten können von einem Parkleitsystem 10 empfangen werden.

Ferner umfasst das Verfahren einen Schritt S2 zum Empfangen von Abmeldenachricht von Fahrzeugen, die diesen Parkraum 100 verlassen. Diese Abmeldenachricht werden von Fahrzeugen vor, während oder unmittelbar nach dem Verlassen des Parkraums 100 ausgesendete und können von dem Parkleitsystem 10 empfangen werden.

Weiterhin umfasst das Verfahren einen Schritt S3 zum Ermitteln optimaler Positionen von Fahrzeugen innerhalb des Parkraums 100. Das Ermitteln der optimalen Positionen der Fahrzeuge erfolgt insbesondere unter Verwendung der empfangenen Anmeldenachrichten und der empfangenen Abmeldenachrichten.

Darüber hinaus umfasst das Verfahren einen Schritt S4 zum Aussenden eine Aufforderung zum Wechsel einer Parkposition an ein ganz oder zumindest teilweise autonom fahrendes Fahrzeug in dem Parkraum 100. Insbesondere wird eine solche Aufforderung zum Wechsler Parkposition ausgesendet, falls eine aktuelle Position des jeweiligen Fahrzeugs in dem Parkraum 100 von einer ermittelten optimalen Position für das Fahrzeug abweicht.

Das Ermitteln der optimalen Parkposition erfolgt insbesondere unter Verwendung von Informationen über die Abmessungen der Fahrzeuge in dem Parkraum. Zusätzlich oder alternativ können auch Daten wie die erwartete Parkdauer der Fahrzeuge in dem Parkraum, ein zu erwartender zukünftiger Parkplatzbedarf und/oder eine Verkehrssituation in der Umgebung des Parkraums mitberücksichtigt werden.

Zusammenfassend betrifft die vorliegende Erfindung eine Optimierung der Ausnutzung eines Parkraums zum Abstellen von Fahrzeugen. Hierzu ist es vorgesehen, dass es sich Fahrzeugen beim Nutzen des Parkraums bei einem Parkleitsystem anmelden und sich beim Verlassen des Parkraums abmelden. Unter Verwendung dieser Anmelde- und Abmeldeinformationen kann eine optimale Positionierung der Fahrzeuge in dem Parkraum bestimmt werden. Bei Bedarf können ganz oder zumindest teilweise autonom fahrende Fahrzeuge veranlasst werden, ihre Position in dem Parkraum zu verändern.

### Bezugszeichenliste

- 10: Parkleitsystem
- 11: Verarbeitungseinrichtung
- 12: Kommunikationseinrichtung
- 13: Umfeldsensor

- 20: Vorrichtung zur Koordination eines Parkraums

- 100: Parkraum

- 201-203: Fahrzeuge
- 204: weiteres Fahrzeug

- S1-S4: Verfahrensschritte

## Patentansprüche

1. Parkleitsystem (10) zur Optimierung eines Parkraums (100) zum Abstellen von Fahrzeugen, mit:
einer Kommunikationseinrichtung (12), die dazu ausgelegt ist, Anmeldenachrichten von Fahrzeugen (201-203) zu empfangen, die in dem Parkraum (100) geparkt werden und Abmeldenachrichten von Fahrzeugen (201-203) zu empfangen, die den Parkraum (100) verlassen;
einer Verarbeitungseinrichtung (11), die dazu ausgelegt ist, optimale Positionen von Fahrzeugen (201-203) zu ermitteln, die in dem Parkraum (100) geparkt werden sollen, wobei die optimalen Positionen unter Verwendung der empfangenen Anmeldenachrichten und der empfangenen Abmeldenachrichten ermittelt werden, und eine Aufforderung zum Wechsel einer Parkposition für ein Fahrzeug (201-203) in dem Parkraum (100) zu generieren, falls die aktuelle Position des Fahrzeugs (201-203) in dem Parkraum von der ermittelten optimalen Position für das Fahrzeug (201-203) abweicht;
wobei die Kommunikationsvorrichtung (12) ferner dazu ausgelegt ist, die generierte Aufforderung zum Wechsel der Parkposition auszusenden.

2. Parkleitsystem nach Anspruch 1, wobei die Kommunikationsvorrichtung (12) dazu ausgelegt ist, eine Anfrage für eine Parkposition von einem weiteren Fahrzeug (204) zu empfangen,
wobei die Verarbeitungsvorrichtung (11) dazu ausgelegt ist, eine Parkposition für das weitere Fahrzeug (204) in dem Parkraum (100) zu ermitteln, und
wobei die Kommunikationsvorrichtung (12) ferner dazu ausgelegt ist, Informationen bezüglich der ermittelten Parkposition an das weitere Fahrzeug (204) zu übertragen.

3. Parkleitsystem (10) nach Anspruch 1 oder 2, wobei die Kommunikationseinrichtung (12) und die Verarbeitungseinrichtung (11) in einer ortsfesten stationären Infrastruktur angeordnet sind.

4. Parkleitsystem (10) nach einem der Ansprüche 1 bis 3, mit einem Umfeldsensor (13), der dazu ausgelegt ist, den Parkraum (100) zu überwachen und Sensordaten des überwachten Parkraums (100) bereitzustellen;
wobei die Verarbeitungseinrichtung (11) dazu ausgelegt ist, die optimalen Positionen von Fahrzeugen (201-203) in dem Parkraum (100) unter Verwendung der Sensordaten von dem Umfeldsensor (13) zu ermitteln.

5. Parkleitsystem (10) nach Anspruch 1 oder 2, wobei das Parkleitsystem (10) dazu ausgelegt ist, in einem ganz oder zumindest teilweise autonom fahrenden Fahrzeug angeordnet zu werden.

6. Vorrichtung (20) zur Koordination eines Parkraums (100), wobei die Vorrichtung (20) dazu ausgelegt ist,
- in einem ganz oder zumindest teilweise autonom fahrenden Fahrzeug angeordnet zu werden,
- eine Anmeldenachricht auszusenden, falls das Fahrzeug auf einem Parkplatz eines zu koordinierenden Parkraums (100) abgestellt wird, und
- eine Abmeldenachricht auszusenden, falls das Fahrzeug den Parkplatz des zu koordinierenden Parkraums verlässt.

7. Vorrichtung (20) nach Anspruch 6, wobei die Anmeldenachricht eine Kennung des Fahrzeugs, Informationen über eine Position des durch das Fahrzeug belegten Parkplatzes, Abmessungen des durch das Fahrzeug belegten Parkplatzes, über das Umfeld des Fahrzeugs, eine geplante Parkdauer, einen Ladezustand der Traktionsbatterie, einen Kraftstoffvorrat, und/oder Manövriereigenschaften des Fahrzeugs umfasst.

8. Vorrichtung (20) nach Anspruch 6 oder 7, wobei die Abmeldenachricht eine Kennung des Fahrzeugs, Informationen über eine Position und/oder Abmessungen des von dem Fahrzeug zuvor belegten Parkplatzes und/oder Informationen über das Umfeld des von dem Fahrzeug zuvor belegten Parkplatzes umfasst.

9. Vorrichtung (20) nach einem der Ansprüche 6 bis 8, wobei die Vorrichtung (20) dazu ausgelegt ist, eine Anforderung zum Wechsel des Parkplatzes zu empfangen und das ganz oder zumindest teilweise autonom fahrende Fahrzeug unter Verwendung der empfangenen Anforderung zu veranlassen einen Wechsel des Parklatzes auszuführen.

10. Vorrichtung (20) nach einem der Ansprüche 6 bis 9, wobei die Vorrichtung (20) dazu ausgelegt ist, eine Benachrichtigung auszusenden, falls eine Anforderung zum Wechsel des Parkplatzes empfangen worden ist.

11. Vorrichtung (20) nach Anspruch 10, wobei die Vorrichtung (20) dazu ausgelegt ist, eine Benutzerfreigabe für den Wechsel des Parkplatzes zu empfangen und das Fahrzeug erst dann zu veranlassen einen Wechsel des Parklatzes auszuführen, nachdem die Benutzerfreigabe für den Wechsel des Parkplatzes zu empfangen worden ist.

12. Vorrichtung (20) nach einem der Ansprüche 6 bis 11, wobei die Vorrichtung (20) dazu ausgelegt ist, eine Benutzeranforderung zu empfangen und das ganz oder zumindest teilweise autonom fahrende Fahrzeug unter Verwendung der empfangenen Benutzeranforderung zu veranlassen eine in der Benutzeranforderung spezifizierte Position anzusteuern.

13. Ganz oder zumindest teilweise autonom fahrendes Fahrzeug, mit Vorrichtung (20) zur Koordination von Parkraum nach einem der Ansprüche 6 bis 12.

14. Verfahren zur Koordination eines Parkraums (100) zum Abstellen von Fahrzeugen, mit den Schritten:
Empfangen (S1) von Anmeldenachrichten von Fahrzeugen (201-203), die in dem Parkraum (100) geparkt werden;
Empfangen (S2) von Abmeldenachrichten von Fahrzeugen (201-203), die den Parkraum (100) verlassen;
Ermitteln (S3) optimaler Positionen von Fahrzeuge (201-203), die in dem Parkraum (100) geparkt werden sollen, unter Verwendung der empfangenen Anmeldenachrichten und der empfangenen Abmeldenachrichten;
Aussenden (S4) einer Aufforderung zum Wechsel einer Parkposition an ein ganz oder zumindest teilweise autonom fahrendes Fahrzeug in dem Parkraum (100), falls die aktuelle Position des Fahrzeugs in dem Parkraum von der ermittelten optimalen Position für das Fahrzeug abweicht.

15. Verfahren nach Anspruch 14, wobei das Ermitteln (S3) der optimalen Parkpositionen unter Verwendung von Informationen über Abmessungen der Fahrzeuge (201-203) in dem Parkraum (100), erwartete Parkdauern der Fahrzeuge (201-203) in dem Parkraum (100), eines zu erwartenden zukünftigen Parkplatzbedarfs und/oder einer Verkehrssituation in der Umgebung des Parkraums erfolgt.
